## Europäisches Patentamt
## European Patent Office
## Office européen des brevets

(19)

(11) Publication number: **0 081 298**
**A1**

(12)

# EUROPEAN PATENT APPLICATION

(21) Application number: **82305982.9**

(22) Date of filing: **10.11.82**

(51) Int. Cl.³: **B 29 F 3/08**
**B 29 D 23/18**

(30) Priority: **04.12.81 CA 391511**

(43) Date of publication of application:
**15.06.83 Bulletin 83/24**

(84) Designated Contracting States:
**DE FR GB IT NL**

(71) Applicant: **Lupke, Manfred Arno Alfred**
**35 Ironshield Crescent**
**Thornhill Ontario(CA)**

(71) Applicant: **Lupke, Gerd Paul Heinrich**
**46 Stornoway Crescent**
**Thornhill Ontario(CA)**

(72) Inventor: **Lupke, Manfred Arno Alfred**
**35 Ironshield Crescent**
**Thornhill Ontario(CA)**

(72) Inventor: **Lupke, Gerd Paul Heinrich**
**46 Stornoway Crescent**
**Thornhill Ontario(CA)**

(74) Representative: **Brooke-Smith, Fred et al,**
**STEVENS, HEWLETT & PERKINS 5 Quality Court**
**Chancery Lane**
**London WC2A 1HZ(GB)**

(54) Apparatus for producing multi-walled thermoplastic tubing.

(57) In an appartus for producing multi-walled thermoplastic tubing (26,27) in which the inner (27) and outer (26) tubing walls are continously formed by extrusion one within the other, the inner tube (27) being urged outwardly into pressing engagement with the outer tube (26), the mechanism for urging the inner tube (27) outwardly into securement with the outer tube comprises a shuttle (36) mounted on a longitudinal guide (34) and having an expansible wall (37). The shutter (36) is reciprocated between first and second limit positions (42,58), the expansible wall (37) thereof being alternately expanded and collapsed in response to the arrival of the shuttle at its limit positions (42,48). By this means, a more effective joint between the inner (27) and outer (26) walls of the tubing (26,27) is achieved.

./...

Croydon Printing Company Ltd

EP 0 081 298 A1

FIG. 2b

## APPARATUS FOR PRODUCING MULTI-WALLED THERMOPLASTIC TUBING

This invention relates to an apparatus for producing multi-walled thermoplastic tubing, the apparatus being of the type comprising a longitudinally extending continuously advancing mold cavity, extrusion means for forming a first tube of thermoplastic material at a first upstream position relative to the cavity and for forming a second tube of thermoplastic material at a second downstream position within the first tube, means for expanding the first tube into molding relation with the mold cavity and means for pressing the second tube into securement with the first tube.

Such apparatus may be used to produce tubing with a corrugated outer wall and a smooth inner wall. Tubing of this type is used extensively where light weight and high compressive strength are required. To manufacture the pipe, mold assemblies are used which present a corrugated mold cavity. The invention is not, however, limited to apparatus with a corrugated mold cavity.

One apparatus of this type is disclosed in our United States Patent No. 4,226,580, dated October 7, 1980 for "Apparatus For Producing Thermoplastic Tubing". That apparatus includes a particular mechanism for pressing the inner tube into securement with the corrugations of the outer tube. Although this mechanism is a considerable improvement on previous mechanisms employed for the purpose, it has the limitation that it can only engage the inner tube over discrete circumferential segments and not simultaneously over the entire circumference, and so the end product may have regions at which the walls are not satisfactorily joined.

According to the present invention, an apparatus of the type referred to above is characterized in that the means for pressing the second tube of thermoplastic material outwardly into securement with the first tube comprises:

a shuttle mounted in the mold cavity for reciprocatory movement therealong between an upstream first limit position and a downstream second limit position, the shuttle having a radially expansible peripheral wall with a length along the mold cavity greater than the distance between the first and second limit positions;

means responsive to the presence of the shuttle at the first limit position for expanding the expansible wall into pressing engagement with the second tube of thermoplastic material, such that the second tube is pressed against the first tube and the shuttle is transported by the second tube toward the second limit position;

means responsive to the presence of the shuttle at the second limit position for collapsing the expansible wall; and means for displacing the shuttle to the first limit position upon collapse of the expansible wall.

Preferably, the expansible wall of the shuttle comprises an elastomeric sleeve which is expanded and collapsed pneumatically under the control of valves which are responsive to the position of the shuttle.

The present invention also relates to a method of producing multi-walled thermoplastic tubing comprising extruding a first tube of thermoplastic material into a travelling mold cavity, expanding the first tube into the mold cavity, extruding a second tube of thermoplastic material into the first tube and pressing the second tube into secure engagement with the first tube.

According to the present invention, the method is characterized by the step of pressing the second tube into engagement with the first tube comprising:

radially expanding a shuttle at a starting position inside the second tube, so as to press the second tube into engagement with the first tube over a circumferential band of each tube; allowing the expanded shuttle to be advanced with the second tube a distance less than the length of said circumferential band; and contracting the advanced shuttle to free it from engagement with the second tube and returning the contracted shuttle to the starting position.

One preferred embodiment of the invention will now be described, by way of example, with reference to the accompanying drawings, in which:

Figure 1 is a side view of an apparatus in accordance with the invention for producing multi-walled thermoplastic tubing having a corrugated outer wall, and

Figures 2a, 2b and 2c show, on an enlarged scale, sectional views taken on line 2-2 in Figure 1 reading from right to left.

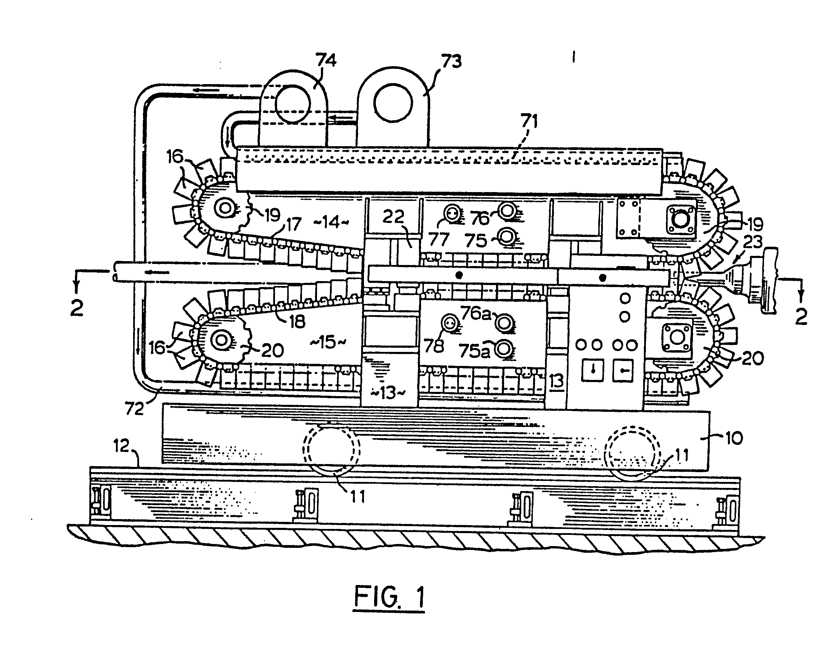

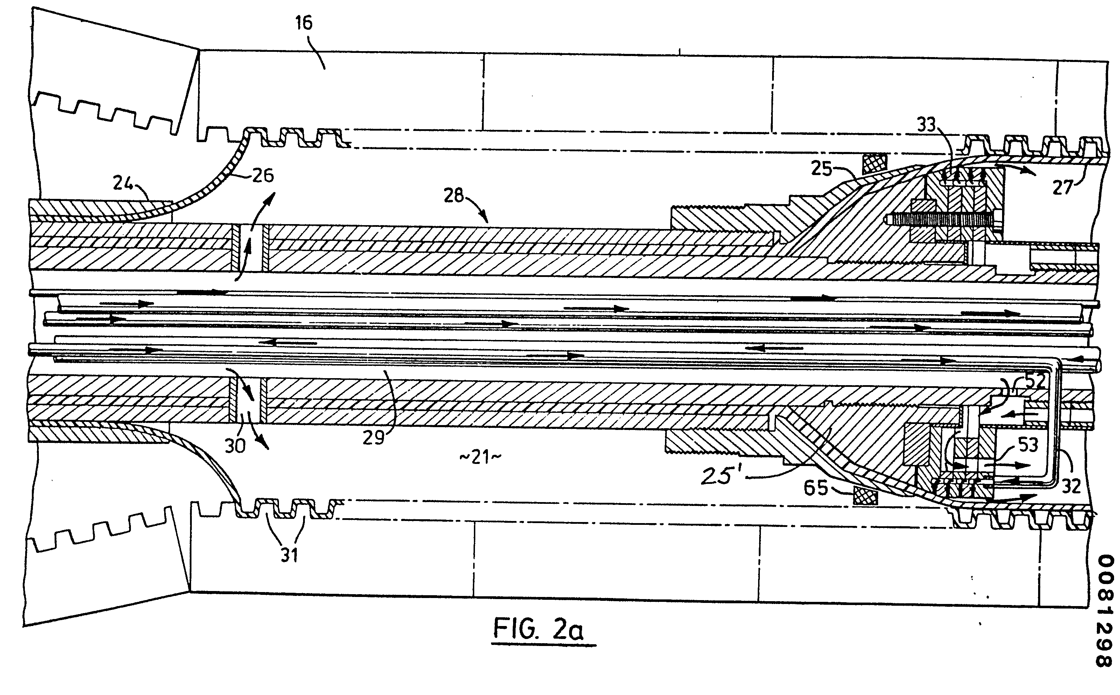

Referring to Figure 1, the apparatus comprises a wheeled structure including a carriage 10 having wheels 11 which run on tracks 12. A support structure 13 which is mounted on the carriage 10 supports a pair of complementary upper and lower mold assemblies 14 and 15, respectively. Each mold assembly includes an endless train of mold blocks 16 providing respective half molds. The mold assembly 14 also includes a pair of transversely spaced endless conveyor chains (only one of which is shown in the drawings and is denoted by the reference numeral 17), with each mold block 16 of the assembly extending transversely between opposed links of these chains. The mold assembly 15 likewise has a pair of endless conveyor chains (only one of which is shown in the drawings and is denoted by the reference numeral 18), with each mold block 16 of the assembly extending transversely between opposed links of this pair of chains. The chains are entrained around pairs of drive sprockets 19, 19 and 20, 20, with drive means (not shown) being connected to at least one of the sprockets 19 and to at least one of the sprockets 20 for driving the mold blocks 16 of the two assemblies in synchronism so that the mold blocks of each assembly are circulated along an endless path including a forward run and a return run. The mold blocks co-operate in pairs along the forward run to define a longitudinally extending mold cavity 21 (Fig. 2a).

The support structure 13 includes mechanical jacks 22 interconnecting the upper and lower mold assemblies 14 and 15, these jacks being operable to raise the upper assembly from the lower assembly, when required, to permit easy access for servicing.

By means of the wheeled carriage 10 the mold assemblies 14 and 15 are positioned to locate an extrusion head 23 at the entrance to the mold cavity 21, the extrusion head being coupled to the nozzle of an extruder (not shown) which may be of conventional form. If required, the mold assemblies 14 and 15 can bemoved away from the extrusion head 23 by movement of the wheeled carriage 10 along the track 12 in order to provide access to the extrusion head.

As described in our U.S. Patent No. 4,226,580, identified above, each mold assembly 14, 15 may also include an air distributing  duct 71, 72 extending along the return run of the mold blocks 16 and positioned to distribute cooling air to the exposed interior molding surfaces of the mold blocks as they travel along the return run. The distributing ducts 71, 72 are connected to respective blowers 73, 74 which supply the cooling air. Each mold assembly 14 15 further includes a heat sink provided by a tank through which cooling water may be circulated. Inlet and outlet water connections 75, 76 and 75a, 76a for the heat sinks are shown. The mold assemblies are cooled to maintain a proper operating temperature during a molding operation. In order to avoid material wastage at the commencement of a molding operation, the water in the housings may be preheated to the required temperature by electrical immersion heaters mounted in the walls of the housings as shown at 77, 78.

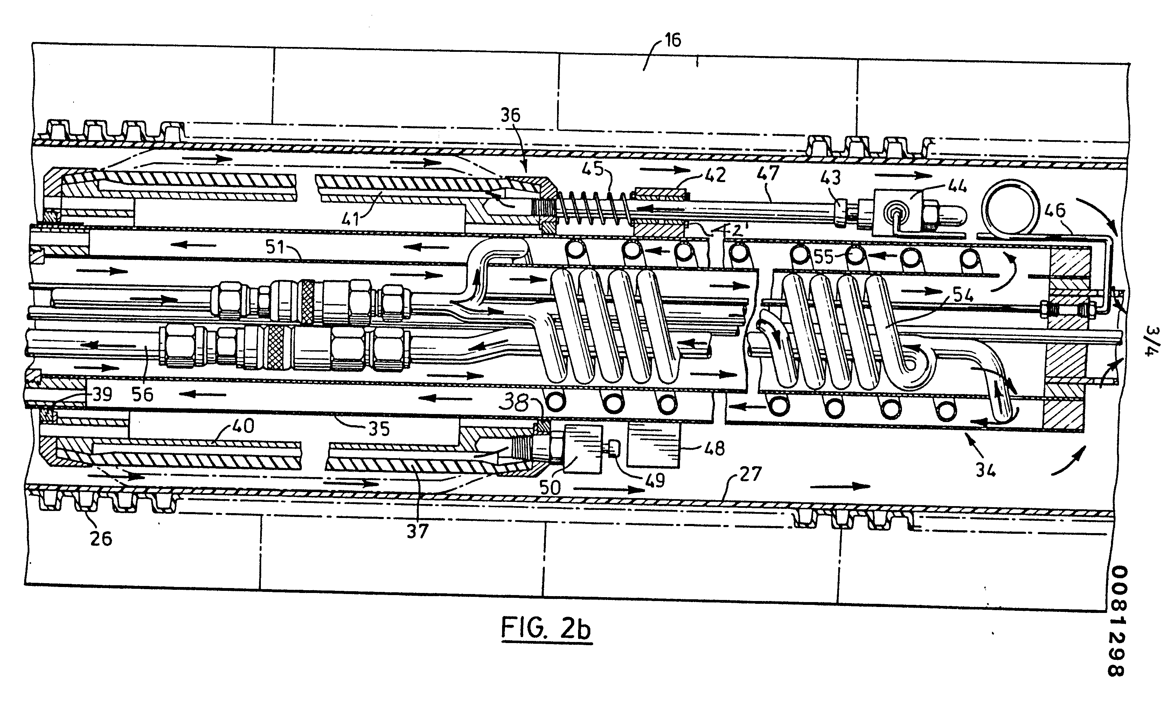

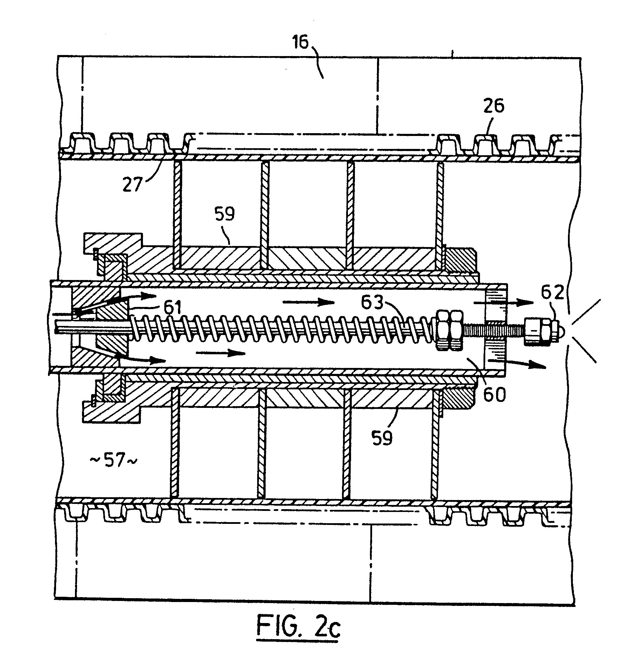

Referring now to Figures 2a, 2b and 2c, the extrusion head 23 has two longitudinally spaced annular extrusion dies 24 and 25. The first die 24 forms a first outer tube of thermoplastic material 26 at a first position within the mold cavity 21, and the second die 25 forms a second inner tube of thermoplastic material 27 at a second position within the first tube. An elongated cylindrical member 28 connected at one end to the extrusion head 23 extends along the mold cavity 21 defined by the molding surfaces of the mold blocks 16 and provides an internal passage 29 for supplying pressurized air or gas via ports 30 to the space within the newly formed outer tube 26. In this way the newly extruded plastic tubing is blow molded against the surfaces of the half molds 16, which in the illustrated embodiment are shown as having transverse corrugation imparting ribs 31.

It is to be understood that instead of blow molding the tube 26 to form a corrugated outer wall by means of internal gas pressure, the tube may be molded by vacuum forming, in which case ducts would be provided in the mold blocks 16 for connection to a vacuum source.

The second tube 27 is extruded from the orifice of the die 25 at a position downstream of the die 24, and is initially expanded into engagement with the corrugations of the outer tube 26 by means of air or pressure. The air or gas for this purpose is supplied via a pipe 32 extending within the passage 29 and communicating with a manifold 33 providing orifices for ejecting the pressurized gas to the interior of the tube 27.

Following the expansion of the inner tube 27 into engagement with the corrugations of the outer tube 26, the inner tube is pressed outwardly against the corrugations to join the tubes integrally together. For this purpose the cylindrical member 28 has a longitudinal extension 34 providing a cylindrical bearing surface 35 on which a shuttle 36 is slidably mounted for reciprocatory movement between first upstream and second, downstream limit positions. The shuttle has a radially expansible wall consisting of a sleeve 37 of elastomeric material such as rubber, which is expanded to engage the inner tube and to press a circumferential band of the inner tube 27 into engagement with a corresponding band of the outer tube 26. Engagement of the expanded sleeve with the inner tube causes forward movement of the shuttle to the downstream limit position where the sleeve is collapsed to permit return of the shuttle to its starting position.

The shuttle has a pair of longitudinally spaced annular bearing members 38, 39 which slidingly engage the bearing surface 35. The shuttle also provides a cylindrical wall member 40 spaced interiorly of the sleeve 37 to define an annular chamber 41 to which pressurized air or gas is admitted for expanding the sleeve and from which the air or gas is released for collapsing the sleeve. The first limit position is defined by a fixed stop 42 mounted on the guide member 34, and a stop engaging member 43 which is arranged to engage the stop 42 upon arrival of the shuttle at its first position for operating a pneumatic valve 44. The shuttle 36 is biassed towards the first limit position by a compression spring 45 acting between the shuttle and the fixed stop 42. Upon  arrival of the shuttle at the first limit position, the valve 44 is opened by the member 43 thus admitting pressurized air or gas from a source (not shown) via a flexible pipe 46 and a supply pipe 47 communicating with the chamber 41. The pipe 47 is rigid and serves to maintain the stop engaging member 43 at a fixed distance from the shuttle 36. Pipe 47 is also journalled in bushings 42' carried by stop 42 to ensure circumferential alignment.

The second limit position of the shuttle is defined by a fixed stop 48 mounted on the guide member 34 and a stop engaging member 49 positioned to engage the stop 48 for actuating a pneumatic valve 50. When the valve 50 is opened, upon arrival of the shuttle at the second limit position, the air or gas is released from the chamber 41, thus collapsing the sleeve and permitting the return of the shuttle to its first limit position in accordance with the bias exerted by the compression spring 45. Thus, in operation, when the shuttle is at the first limit position air or gas is admitted to the chamber 41, and the sleeve 37 is expanded into engagement with the inner tube to urge the inner tube into pressing engagement with the corrugations of the outer tube 26. The shuttle is then transported by the forward movement of the tubing until the second limit position is reached, at which point the air or gas is released from the chamber 31 and the shuttle is returned to its initial position at which the cycle is repeated.

The travel of the shuttle, that is the distance between the limit positions is less than the length of the sleeve 37. This ensures that there is some overlap of the tubing bands pressed in sequential strokes. In preferred embodiments, every part of the inner tube is engaged during at least four strokes of the shuttle.

The cylindrical guide 34 has internal partitions 51 which define a re-entrant flow passage for the flow of cooling gas, the return leg of the flow passage terminating at ports 52 communicating with exits 53 adjacent to the position at which the inner tube of thermoplastic material is formed. Cooling coils 54, 55 located in the inner and outer legs of the re-entrant coolant passage are provided for cooling the gas as it flows therethrough, refrigerant being supplied to the coils through pipes 56.

The cooling gas from the exit 53 flows interiorly of the tubing through a space 57 (Figure 2 C) which is closed at one end by annular baffles 58 mounted on a support member 59 extending from the forward end of the member 34. The support member provides an internal passage 60 containing a spring loaded relief valve 61 for releasing coolant from the space 57 and so preventing a build up of excessive pressure therein.

Extending from the forward end of the baffle support 59 is an atomizer head 62, to which a cooling liquid such as water is supplied via a pipe 63, the cooling liquid being atomized so as to spray the interior of the multi-walled tubing after it has been formed to promote cooling of the thermoplastic material.

As previously mentioned, the air or coolant from the manifold 33 issues through radial orifices and impinges on the inner surface of the tube 27 adjacent to the position at which the tube is extruded. In the illustrated embodiment the die 25 and its associated mandrel 25' are shaped so as to extrude the tubing outwardly. The effect of the cooling flow through the orifices is to release the plastic from the mandrel and to cool the inner surface of the plastic sufficiently to prevent the plastic from sticking to the mandrel.

Another feature of the illustrated embodiment is the provision of a heater shown diagrammatically as an electrically energisable heating coil 65, which is mounted on the die 25 immediately before the position at which the second plastic tube is extruded. The purpose of this heating coil 65 is to soften the inner surface of the outer tube 26, which may have cooled to some extent, so that the inner and outer tubes can be more satisfactorily welded together.

While one embodiment of the present invention has been described in the foregoing, it is to be understood that the present invention is not limited to that embodiment. The scope of the present invention is to be determined solely by reference to the following claims.

CLAIMS

1.     An apparatus for producing multi-walled thermoplastic tubing, the apparatus comprising a longitudinally
extending continuously advancing mold cavity, extrusion
means for forming a first tube of thermoplastic material
at a first upstream position relative to the cavity and
for forming a second tube of thermoplastic material at a
second downstream position with the first tube, means for
expanding the first tube into molding relation with said
mold cavity and means for pressing the second tube into
securement with said first tube, characterized in that
the means for the second tube outwardly into securement
with the first tube comprises:

        a shuttle (36) mounted  in the mold cavity for
reciprocatory movement therealong between an upstream
first limit position and a downstream second limit position, the shuttle having a radially expansible peripheral
wall (37) with a length along the mold cavity greater
than the distance between the first and second limit
positions;

        means (49,50) responsive to the presence of the
shuttle at said first limit position for expanding said
expansible wall into pressing engagement with said second tube of thermoplastic material such that the second
tube is pressed against the first tube and the shuttle is
transported by the second tube towards said second limit
position;

        means (43,44) responsive to the presence of the
shuttle at said second limit position for collapsing said
expansible wall; and

        means (45) for displacing the shuttle to said first
limit position upon collapse of the expansible wall.

2.     An apparatus according to claim 1 characterized
in that guide means (34) extend longitudinally within the
mold cavity and the shuttle is mounted slidable on the guide means.

3.      An apparatus according to claim 2 characterized
in that the means for displacing the shuttle to the
first limit position upon collapse of the expansible wall
comprise biassing means (45) for continuously biassing
the shuttle towards the first limit position.

4.      Apparatus according to claim 2, characterized in
that said first and second limit positions are defined by
first and second stop members (42,48) mounted on said
guide means, and first and second stop engaging members
(43,49) carried by the shuttle and engageable with said
stop members for actuating respectively said means responsive to the presence of the shuttle at said first
and second limit positions.

5.      Apparatus according to claim 4, wherein said
radially expansible wall of the shuttle comprises a
sleeve of elastomeric material (37), the apparatus including vlave means (44,50) actuated by said stop engaging members for admitting pressurised fluid to and
from the interior of the sleeve for expanding and collapsing the sleeve.

6.      Apparatus according to claim 5, characterized
in that said guide means provides a longitudinally extending cylindrical bearing surface (35),the shuttle
further comprises a pair of longitudinally spaced annular bearing members (38,39) slidably engaging said
bearing surface and a cylindrical wall member (40)
positioned interiorly of said sleeve, the cylindrical
wall member defining with the sleeve an annular chamber
(41), and said valve means communicating with said
chamber for respectively admitting pressurized fluid
thereto and exhausting fluid there from for expanding
and collapsing the sleeve.

7.      Apparatus according to claim 6, characterized
in that said guide means comprises a hollow cylindrical member (34) closed at its forward end and containing internal partition means (51) defining a re-entrant flow passage for the flow of cooling gas, said re-entrant flow passage having an exit opening (52,53) adjacent said second position at which the second tube of thermoplastic material is formed for delivery cooling gas to the second tube as it is formed thereat.

8. Apparatus according to claim 7, characterized in that baffle support means (59) extend from the forward end of said cylindrical member and baffle (58) are mounted thereon, the baffles co-operating with said second tube of thermoplastic material and defining therewith a closed space (57) to receive cooling gas from said exit opening, the baffle support means providing a passage (60) communicating with said closed space and a relief valve (61) in said passage for the release of gas therethrough.

9. Apparatus according to claim 6, characterized in that an atomizer nozzle (62) is positioned downstream of the baffle support means and means (63) are provided for supplying cooling liquid to the atomizer nozzle.

10. Apparatus according to claim 1, characterized in that annular heater means (65) are mounted in said mold cavity at a position immediately before said second position for softening the thermoplastic material of the first tube, and means (33) are provided for directing coolant radially outwardly onto the inner surface of the second tube at a position immediately after said second position for releasing the thermoplastic material of the second tube from said extrusion means.

11. A method of producing multi-walled thermoplastic tubing comprising extruding a first tube of thermoplastic material into a travelling mold cavity, expanding the first tube into the mold cavity, extruding a second tube of thermoplastic material into the first tube and pressing the second tube into secure engagement with the first tube, characterized in that the step of pressing the second tube into engagement with the first take comprises:

radially expanding a shuttle at a first position inside the second tube, so as to press the second tube into engagement with the first tube over a circumferential band of each tube;

allowing the expanded shuttle to be advanced with the second tube a distance less than the length of the circumferential band;

contracting the advanced shuttle to free it from engagement with the second tube; and returning the contracted shuttle to the first position.

FIG. 1

0081298

FIG. 2a

FIG. 2b

0081298

FIG. 2c

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | B 29 F 3/08 |
| A | US-A-4 084 933 (P. REITEMEYER et al.) <br> * Claims 1-3, 6 ; figures 1, 2 * | 1,5 | B 29 D 23/18 |
| | --- | | |
| D,A | US-A-4 226 580 (G.P.H. LUPKE et al.) <br> * Figure 2 * | 1 | |
| | --- | | |
| A | US-A-3 844 700 (N.N. SOKOLOW) <br> * Column 4, lines 26-48 ; figure 3 * | 1 | |
| | --- | | |
| A | US-A-4 136 143 (G.P.H. LUPKE et al.) | | |
| | --- | | |
| A | GB-A-1 076 985 (A. KIRCHNER) <br> * Claim 1 ; figures 1, 2 * | 1 | **TECHNICAL FIELDS SEARCHED (Int. Cl. ³)** |
| | ----- | | B 29 C 17/00 <br> B 29 D 23/00 <br> B 29 F 3/00 |

The present search report has been drawn up for all claims

| Place of search <br> BERLIN | Date of completion of the search <br> 15-02-1983 | Examiner <br> FINDELI B.F.C |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82